# EUROPEAN PATENT SPECIFICATION

(11) **EP 3 931 642 B1**
(45) Date of publication and mention of the grant of the patent: **03.07.2024**
(21) Application number: 20705072.5
(22) Date of filing: 19.02.2020
(51) Int. Cl.: G05B 11/06, G05B 11/32, B01D 15/10, G01N 30/02, B01D 15/16, G01N 30/32

(54) **AUTOMATED SIMULTANEOUS PROCESS CONTROL**
AUTOMATISIERTE GLEICHZEITIGE PROZESSSTEUERUNG
COMMANDE DE PROCESSUS SIMULTANÉ ET AUTOMATISÉ

(30) Priority: 25.02.2019 EP 19159005
(43) Date of publication of application: 05.01.2022
(73) Proprietor: Bayer Aktiengesellschaft, 51373 Leverkusen (DE)
(72) Inventor: SCHWAN, Peter, 51373 Leverkusen (DE); BRANDT, Heiko, 51371 Leverkusen (DE); LOBEDANN, Martin, 51069 Köln (DE); BORCHERT, Sven-Oliver, 13353 Berlin (DE); WEBER, Nils, 41542 Dormagen (DE)
(74) Representative: BIP Patents
(86) International application number: PCT/EP2020/054282
(87) International publication number: WO 2020/173763

(56) References cited:
- WO-A1-2017/174580
- US-A1- 2011 073 548
- RODRÍGUES M I ET AL: "The Control Problem for Protein Separation by the Continuous Affinity Recycling Extraction Process", ADVANCES IN BIOPROCESS ENGINEERING; ADVANCES IN BIOPROCESS ENGINEERING : [PAPERS PRESENTED AT THE FIRST INTERNATIONAL SYMPOSIUM ON BIOPROCESS ENGINEERING, HELD IN CUERNAVACA, MEXICO], KLUWER, NL , 1 January 1994 (1994-01-01), pages 321-328, XP009515246, DOI: 10.1007/978-94-017-0641-4_44 ISBN: 978-0-7923-3072-1 Retrieved from the Internet: URL:https://link.springer.com/chapter/10.1 007%2F978-94-017-0641-4_44 [retrieved on 2019-08-13]

## Description

In a continuous process for the purification of proteins several process characteristics need to be kept within specific ranges over the entire process duration. In other words, in a continuous process different process steps potentially requiring different values of process characteristics such as pH and conductivity occur at the same time. Hence it needs to be ensured that these process characteristics are within an acceptable range at any time point and at any unit operation throughout the entire process.

Typically, adjustment of the process characteristics occurs in an intermediate tank/surge bag.

However, different process characteristics can influence each other, e.g. the pH set agent influences the conductivity, and both pH and conductivity set agents as well as the input (process) stream itself influences the fill level of a given surge bag. Thus, for example the challenge arises how to adjust the pH level and the conductivity of a given continuous input process stream coming from a given unit operation into an intermediate surge tank/bag in such a way that the output stream of that surge bag has the required pH level and the required conductivity for the next unit operation while maintaining the weight - i.e. the fill level - of the intermediate surge tank/bag within an acceptable range. At the same time an automated process control has to take further events into account for example that the input stream occasionally pauses and the resumes.

In addition the automated process control system has to keep tight operation limits even in a situation where a unit operation comprises a continuous input stream and continuous output stream.

At the same time an automated process control has to take further events into account for example that the input stream occasionally pauses and the resumes.

US 2011/073548 A1 relates to a separation or purification system where multiple separation units are connected in series to form a single unit of operation, and which comprises in-line sensing and adjustment means between each separation unit. The separation system, which may be referred to as a straight through processing (STP) system, integrates multiple chromatography steps and a viral filtration step in a single continuous process. A basic feature of the STP system is that it is designed to perform control of process parameters, including but not limited to pH, conductivity and UV absorbance of the product stream, preferably in a closed loop fashion.

Thus, there is the need for an improved process control strategy automatically handling the different challenges arising during continuous production processes.

Surprisingly it was found that said challenges can be met using a method for automated simultaneous control of at least two process characteristics of a continuous production process with at least one fluid stream, at least two unit operations, at least one process control system and at least one conditioning volume, comprising at least one of the following
a) at least one subsystem for automatically controlling at least two actuators simultaneously which influence the same conditioning volume and/or
b) at least one subsystem for automatically influencing at least one actuator based on a combination of feed forward regulation and feedback control.

Surprisingly it was found that via employing said method the different challenges arising during continuous production processes can be handled automatically resulting in an improved process control strategy.

In detail in relation the at least one subsystem a) for automatically controlling at least two actuators simultaneously which influence the same conditioning volume though the at least two actuators influence the same conditioning volume and hence also influence each other the at least two process characteristics can still be kept within acceptable operating ranges without causing overload of the at least one conditioning volume.

Moreover in relation to the case b) of the at least one subsystem for automatically influencing at least one actuator based on a combination of feed forward regulation and feedback control the subsystem carrying out the method for automated control maintains tight operation limits via influencing at least one actuator based on a combination of feed forward regulation and feed back control. This is surprising as an automated control is also possible using only feedback control or feed forward regulation, however, the combination allows for an especially tight control.

In one embodiment of the method for automated simultaneous control of at least two process characteristics of a continuous production process the method is further characterized by
a) if the method comprises at least one subsystem for automatically controlling at least two actuators which influence the same conditioning volume, the at least one subsystem for automatically controlling at least two actuators simultaneously which influence the same conditioning volume controls the at least two process characteristics via
   - detecting simultaneously at least two characteristics of the fluid stream via at least two independent sensors
   - calculating at least two actuating values, one for each of the at least two measured characteristics, in the at least on process control system
   - influencing via said at least two actuating values at least two actuators,
      and/or
b) if the method comprises at least one subsystem for automatically influencing at least one actuator based on a combination of feed forward regulation and feedback control, the at least one subsystem for automatically influencing at least one actuator based on a combination of feed forward regulation and feedback control influences the at least two process characteristics via
   - detecting at least one feature of at least one conditioning volume upstream of one of the at least two unit operations with at least one sensor
   - detecting at least one feature related to the loading of the said one of the at least two unit operations
   - calculating at least one actuating value in the at least on process control system based on the detected at least one feature of at least one conditioning volume upstream of the said one of the at least two unit operations as well as the at least one feature related to the loading of the said one of the at least two unit operation
   - influencing the at least one actuator via said at least one actuating value
wherein said influencing of the actuator is thus based on a combination of feed forward regulation derived from the at least one detected feature related to the loading of the one said of the at least two unit operations and feedback control derived from the at least one detected feature of at least one conditioning volume.

To a person skilled in the art it is obvious that the subsystem a) for automatically controlling at least two actuators simultaneously which influence the same conditioning volume simultaneously can also comprise only one sensor, if said sensor can detect at least two characteristics of the fluid stream simultaneously.

Further it is obvious to a skilled person that the influence of the at least one process control system on the at least two actuators via the at least two actuating values can also comprise that the setting of the actuators e.g. a pump rate is not changed. This could for example be the case if the actuating value has not changed since the previous actuating value was calculated by the at least one process control system e.g. because the actual process characteristic has not changed.

To a skilled person it is further obvious that the method step of detecting at least one feature related to the loading of the one said of the at least two unit operations can comprise detecting at least one feature related to the loading of said unit operation directly before, after or in parallel to said unit operation or detection within the at least one conditioning volume upstream of said unit operation.

As used herein, the expression "at least one" means one or more.

It is also to be understood that, as used herein the terms "the," "a," or "an," mean "at least one," are understood to encompass the plural as well as the singular and should not be limited to "only one" unless explicitly indicated to the contrary.

As used herein the term "automated" or "automatically" refers to the fact that no human intervention is needed.

As used herein the term "continuous" refers to a method for carrying out at least two method steps and/or unit operations in series in which the outlet fluid stream (fluid flow) of an upstream step is transported to a downstream step. The downstream step begins processing the fluid flow before the upstream step is completed. Accordingly, continuous transport or transfer of a fluid flow from an upstream unit to a downstream unit means that the downstream unit is already in operation before the upstream is shut down, i.e. that two units connected in series simultaneously process the fluid flow that is flowing through them.

Hence a continuous process is a process that runs continuously and a continuous production process is a production process running continuously.

As used herein the term "unit operation" refers to a method step in a production process and/or to the device carrying out said method step in a production process. Examples of unit operations in the purification of proteins are a chromatography, a filtration, a diafiltration, an ultrafiltration, etc.

If the term "feed and bleed" is used in relation to a unit operation it refers to a unit operation, characterized by a continuous input stream and continuous output stream. An example of a feed and bleed unit operation is a case where the output stream has an increased target concentration which can be adjusted e.g. in an ultrafiltration unit operation. A different example of a feed and bleed unit operation is the case where the pH and/or the conductivity of the output stream is different from the pH and/or the conductivity of the input stream. Even in these situations, which are difficult to control the automated process control system is capable of to keeping tight operation limits.

As used herein the term "fluid stream" or "fluid flow" refers to a flow of liquid and/or gas. In the sense of the current description is usually refers to the flow of liquid between the at least two unit operations. The fluid stream can comprise dissolved or partly dissolved species like a protein of interest or its precipitates or crystals, salts, sugars and cell components like types of DNA or RNA and/ or salts, flocculations, precipitations and/or crystals.

To a person skilled in the art it is clear that there can be times in a continuous production process where the fluid flow is interrupted. In such an event it can happen that the fluid stream must pause, and hence the fluid of the system which would usually flow - as described in the definition above - is still the fluid stream even though it does not flow as long as the continuous production process pauses.

As used herein the term "product stream" is used interchangeably with the terms "product flow" and "process stream" refers to a cell-free fluid from a heterogeneous cell culture fluid mixture that comprises a protein of interest or its isolated fractions thereof, like concentrates, dilutions of eluates etc. For sake of clarity the product stream is also a "fluid stream" or "fluid flow" in the sense of this description. Hence the input product stream enters a unit operation whereas the output product streams exists the unit operation.

An example of a process control system is the PCS7 from Siemens another example would be Delta-V.

As used herein the term "conditioning volume" refers to a portion of the fluid flow, i.e. a volume of fluid, in which the simultaneous detection of the at least two characteristics of the fluid stream takes place and/or in which the detection of at least one feature takes place and/or where the detection of the at least one feature of at least one conditioning volume occurs.

To a skilled person it is clear that the conditioning volume is usually part of a unit operation but that the conditioning volume can also be situated between two unit operations.

In one embodiment of the method and the system described herein the conditioning volume is selected from the group consisting of at least one (surge) bag - also referred to as intermediate tank, intermediate bag or surge tank- and/or in at least one homogenization loop - also referred to as circulation loop - and/or at least one residence time device and/or a defined length of tubing.

In a preferred embodiment of the method for automated simultaneous control of at least two process characteristics of a continuous production process with at least one fluid stream, at least two unit operations, at least one process control system and at least one conditioning volume, comprising at least one subsystem for automatically controlling at least two actuators which influence the same conditioning volume the conditioning volume is selected from the group consisting of at least one surge bag - also referred to as intermediate tank or surge tank - and/or in at least one homogenization loop - also referred to as circulation loop. In other words it is possible to hold or recirculate a volume of fluid in the conditioning volume.

In one embodiment of the method for automated simultaneous control of at least two process characteristics of a continuous production process with at least one fluid stream, at least two unit operations, at least one process control system and at least one conditioning volume, comprising at least one subsystem for automatically influencing at least one actuator based on a combination of feed forward regulation and feedback control the conditioning volume can be realized as defined length of tubing. In such a scenario the pressure of the defined length of tubing in measured as feature of the conditioning volume.

As used herein the term "residence time device" refers to a device such as a coiled flow inverter (Klutz et al. 2016), a helical flow inverter (WO2019063357), a stirred tank or stirred tank cascade, in which a defined portion of the fluid stream spends a predetermined period of time.

As used herein the term "sensor" is used interchangeably with the term "detector".

As used herein the term "characteristics of the fluid stream" refers to a property of the fluid stream. Examples for characteristics of a fluid stream are pH value, conductivity value, load density of a product, conductivity, absorption of the effluent, target protein content, concentration of co-eluting contaminants, product concentration, purity, yield, production rate and In and out of specification.

As used herein the term "feature of at least one conditioning volume" refers to a property of the conditioning volume itself, for example weight of a surge bag or fill level of a homogenization loop, tubing and/or surge bag.

As used herein the term "converter" refers to a device that converts the signal transmitted by the sensor to a signal that the process control system can process.

As used herein the term "actual process characteristic" or "process characteristic" refers to a specific value of a characteristic of the fluid stream or a feature of at least one conditioning volume as it is actually present under the given circumstances.

As used herein the term "set value" is used interchangeably with the terms "set point", "set point value" and "target value" and refers to a specific value of a characteristic of the fluid flow as it should be under the given circumstances and/or at a specific point in time.

As used herein the term "actuating value" refers to a value which it is used to influence an actuator.

As used herein the term "actuator" refers to a device that is capable of influencing the continuous production process via adjusting process characteristics and/or via adjusting the fluid flow. Examples of actuators are a pump, a valve.

As used herein the term "sensor for loading of a unit operation" refers to a sensor either directly detecting how much of a protein of interest is already present in a given unit operation or a sensor, where based on the detected value it can be determined how much of a protein of interest is already present in a given unit operation. An example for a sensor for loading of a unit operation is a UV sensor.

In one embodiment of the method for automated control of at least two process characteristics of a fluid stream of a continuous production process with at least two unit operations, at least one process control system and at least one conditioning volume the at least one process control system further comprises
c) at least one subsystem for matching of the flow rates of slave units to the flow rates of other slave units or master units with the proviso that in the case of several master units an auxiliary stream is opened, and comprising
- at least one master unit, at least one slave unit e.g. at least the said two unit operations, each slave unit influences at least one buffer volume wherein each buffer volume is provided in the form of a surge tank and/or expandable tubing, as well as at least one sensor for each buffer volume.

This subsystem for matching the flow rates of slave units to the flow rates of at least one master unit or other slave units allows for automated flow rate adjustment.

As used herein the term "master unit" refers to a unit operation which predominantly determines a flow rate. As such a master unit comprises at least one device for conveying the product stream, usually a pump or a valve, preferably a pump. The system for the production process can also comprise several master units. Examples of master units are a chromatography and an ultrafiltration.

As used herein the term "slave unit" refers to a unit operation in which the target value of the flow rate is obtained via the control of the state of a variable buffer volume in the same unit or in an adjacent unit along the product stream. In other words, a slave unit must adapt itself to another unit as regards to its flow rate. In case of a conditioning volume said adaption is necessary as the conditioning volume has to balance i.e. compensate the incoming flow rate in order to adjust the pH and conductivity of the fluid flow via adjusting the flow rate of the ph (set) agent and conductivity (set) agent.

As used herein the term "auxiliary stream" refers to a fluid flow which compensates the difference between the flow rates of two master units i.e. it is preferably a non-product-laden, or waste product-laden stream, which is conveyed into or out of the product stream, respectively. Auxiliary streams which are conveyed into the product stream may be controlled.

In a preferred embodiment of the method for automated control of at least two process characteristics of a fluid stream of a continuous production process the method comprising at least one subsystem for automatically controlling at least two actuators which influence the same conditioning volume and further comprises the steps of
- transmitting said at least two characteristics of the fluid stream detected by the at least two independent sensor as signals to least two converters which convert the signals to converted signals and
- transmitting the at least two converted signals to the at least one process control system.

To a person skilled in the art it is obvious that the at least one subsystem a) for automatically controlling at least two actuators simultaneously which influence the same conditioning volume can also comprise only one converter, if said converter can convert the at least two signals simultaneously. In addition, cases of at least two characteristics of the fluid stream can be possible, in which the sensor can directly transmit the at least two characteristics of the fluid stream in the form of at least two signals to the at least one process control system.

In one embodiment of the method for automated control of at least two process characteristics of a fluid stream of a continuous production process the method comprising the at least one subsystem a) for automatically controlling at least two actuators simultaneously which influence the same conditioning volume further comprises the steps of
- transmitting said at least two characteristics of the fluid stream detected by the at least two independent sensor as signals to least two converters which convert the signals to converted signals and
- transmitting the at least two converted signals to the at least one process control system
- as well as additional calculations.

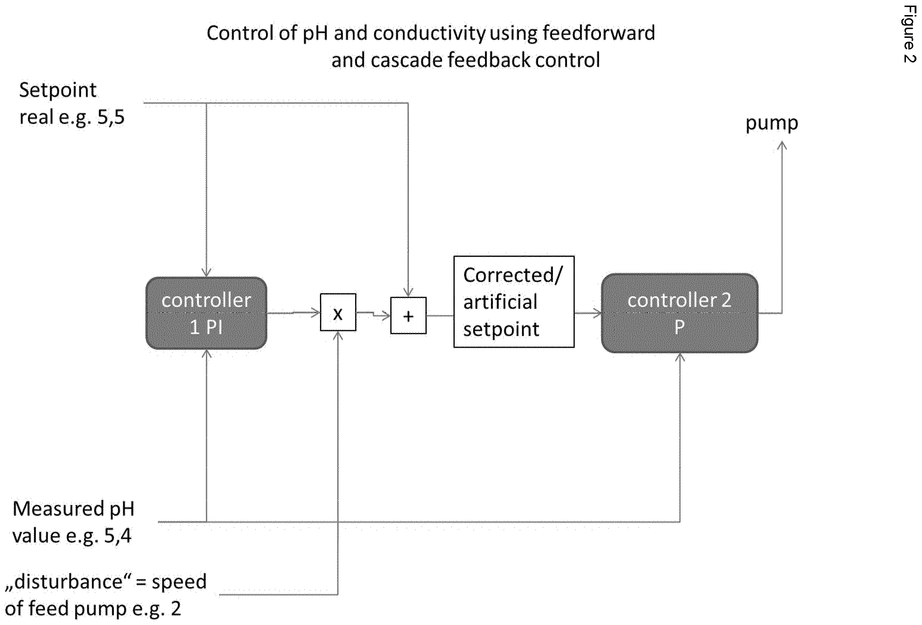

As used herein the term "additional calculations" refers to the fact that it was surprisingly found that it is advantageous to perform additional calculations such as e.g. multiplying/adding/subtracting/lntegration on the determined/measured actual process characteristic in order determine a corrected/artificial setpoint and thus an corrected actuating value, e.g. employing a cascade feedback controller and/or forward control. For example in FIG. 2 employing additional calculations result in a corrected/artificial setpoint thereby leading to a corrected actuating value, which in turn leads to an actual process characteristic closer to the set point.

The additional calculations are always performed in the method a) for automatically controlling at least two actuators which influence the same conditioning volume but depending on the given circumstances the actual process characteristic does not have to differ from the set point value.

In one embodiment of the of the method for automated control of at least two process characteristics of a fluid stream of a continuous production process the method comprises at least two subsystems.

In a further embodiment of the method for automated control of at least two process characteristics of a fluid stream of a continuous production process the method comprises all three subsystems. In other words, the at least one process control system carries out all three methods employing the different subsystems in parallel resulting in an optimal automated process control.

In another aspect what is described herein relates to a system for automated control of at least two process characteristics of a fluid stream of a continuous production process with at least two unit operations, at least one process control system and at least one conditioning volume according to claim 5.

In one embodiment of the above aspect relating to a system for automated control of at least two process characteristics of a fluid stream of a continuous production process with at least two unit operations, at least one process control system and at least one conditioning volume, the system also comprises
c) at least one subsystem for matching of the flow rates of slave units to the flow rates of other slave units or master units with the proviso that in the case of several master units an auxiliary stream is opened, and comprising
- at least one master unit, at least one slave unit e.g. at least the said two unit operations, each slave unit influences at least one buffer volume wherein each buffer volume is provided in the form of a surge tank and/or expandable tubing, as well as at least one sensor for each buffer volume. In other words, in this aspect the system for automated control comprises all three subsystems a), b) and c).

In one embodiment of the system for automated control of at least two process characteristics of a fluid stream of a continuous production process the at least one subsystem for automatically controlling at least two actuators simultaneously further comprises at least two converters to which the at least two independent sensors transmit said at least two characteristics of the fluid stream in the form of at least two signals and which then convert the at least two signals and transmit the at least two converted signals to the at least one process control system.

In a preferred embodiment of the method and system described herein is a continuous production process for biomolecules.

In the same or in a different preferred embodiment of the system for automated control the fluid stream is a continuous fluid stream.

Within the present application controlling (in German "Regeln") refers to the measurement of the value which is to be influenced (control variable) and the continuous comparison of said current value with the desired value (target value) and depending on the deviation between control variable and target value a controller calculates the actuating value supplied to the actuator for minimizing the deviation resulting in the control variable approaching the target value. Hence, this is a feedback or closed control loop. The term feed back - or feedback - refers to a control mechanism which takes process characteristics into account and also affects the same process characteristic that was/were taken into account.

In contrast regulating (in German "Steuern") refers to setting a given actuating value such as a pump rate to a specific value for a given period of time without external or process internal factors or characteristics taking an influence on said specific actuating value.

Moreover, the term feed forward - or feedforward - refers to a regulating mechanism which takes process characteristics into account but without affecting them, hence there is no influence of the feed forward regulation on the process characteristics that input the feed forward regulation.

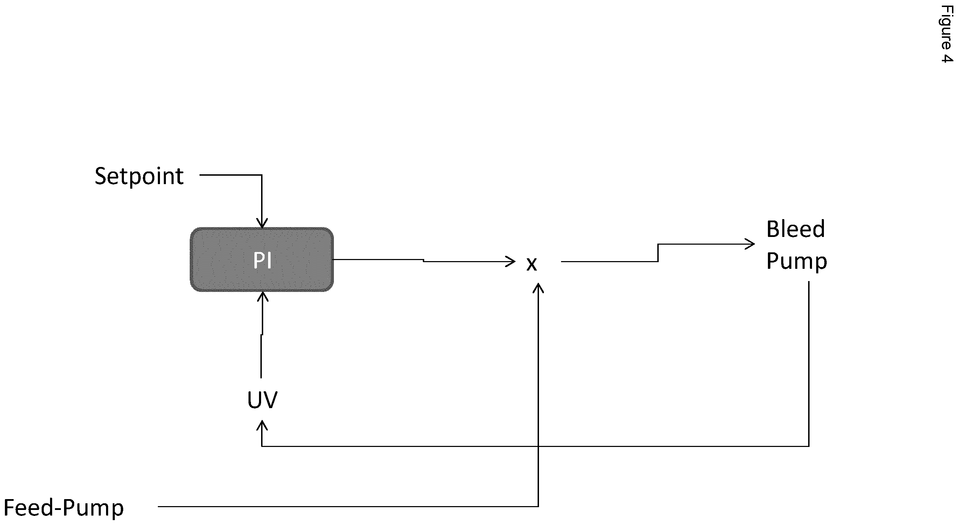

Thus, a combination of feed forward regulation and feedback control as described in subsystem b) is seen as a controlling mechanism, because a feedback component is comprised. In the example depicted in FIG. 4 the feedback component is the UV signal and the feed forward component is the speed of the feed pump, which is not influenced by the actuating value affecting the bleed pump.

Furthermore, via using a feedforward input for the carried out additional calculations, the automatic setting of an artificial set point can be circumvented.

As used herein the term "proportional-integral-derivative controller" refers to a three-term controller. In general the proportional (P)-Part of a proportional-integral-derivative controller indicates the amplification of the control deviation, the integral (I)-Part characterizes the time for integration of the control deviation and the derivative (D)-Part characterizes the time of differentiation of the control deviation.

As used herein the term "fuzzy controller" refers to a strong proportional-controller with output limitation resulting in an on/off volumetric flow.

In one embodiment of the first subsystem the D-Part is set to zero, leaving only the P- and I-Part for parametrization.

In one embodiment at least one subsystem for automatically controlling at least two actuators simultaneously the simultaneous detection of the at least two characteristics of the fluid stream between the at least two unit operations takes place in at least one conditioning volume selected from the group consisting of at least one surge bag - also referred to as intermediate tank or surge tank - and/or in at least one homogenization loop - also referred to as circulation loop - and/or defined length of tubing.

As used herein the term "homogenisation loop" or "circulation loop" refers to a piece of tubing, which allows the process flow to be circulated e.g. pumped in said piece of tubing until a desired characteristic is reached.

To a person skilled in the art it is clear that the process control system of the method for automated control of at least two process characteristics of a fluid stream described herein can comprise only one of the subsystems a), b) or c) or any combination of the subsystems a), b) and/or c), i.e. a) and b), a) and c), b) and c) or a), b) and c)

Moreover, it is clear to a skilled person that the at least two actuators influencing the same conditioning volume simultaneously controlled by subsystem a) can influence the conditioning volume of the subsystem b), i.e. there is only one conditioning volume present.

In addition it is clear to a skilled person that the cases given herein for employing the two subsystems i.e. a homogenization loop connected to a surge bag for the at least one subsystem for automatically controlling at least two actuators simultaneously which influence the same conditioning volume and an ultrafiltration unit for at least one subsystem for automatically influencing at least one actuator based on a combination of feed forward regulation and feedback are merely examples, and depending on the circumstances also a homogenization loop connected to a surge bag can represent an subsystem for automatically influencing at least one actuator based on a combination of feed forward regulation and feedback control while an ultrafiltration unit operation can also comprise a conditioning volume.

In other words, in one example of the method for automated simultaneous control of at least two process characteristics of a fluid stream of a continuous production process described herein the second of the at least two unit operations is an ultrafiltration unit operation and the conditioning volume is an intermediate tank connected to a homogenization loop. In this example both subsystem a) and b) of the method for automated simultaneous control of at least two process characteristics of a fluid stream of a continuous production process can be applied alone or in combination.

In a preferred embodiment of the at least one subsystem a) for automatically controlling at least two actuators simultaneously which influence the same conditioning volume the simultaneous detection of the at least two characteristics of the fluid stream between the at least two unit operations takes place in at least one homogenization loop connected to a surge bag.

In a preferred embodiment of the first subsystem a) the simultaneously detected at least two characteristics are pH and conductivity.

In a preferred embodiment of the at least one subsystem a) for automatically controlling at least two actuators simultaneously which influence the same conditioning volume the measurement of the process characteristics has a short dead time (time delay) enabling a real time measurement of the at least two process characteristics. Additionally the conditioning volume also offers a short dead time, meaning the time needed by a given influence - e.g. a disturbance of a characteristic of the fluid flow such as an alteration in pH value - until said alteration has been communicated to the process control system.

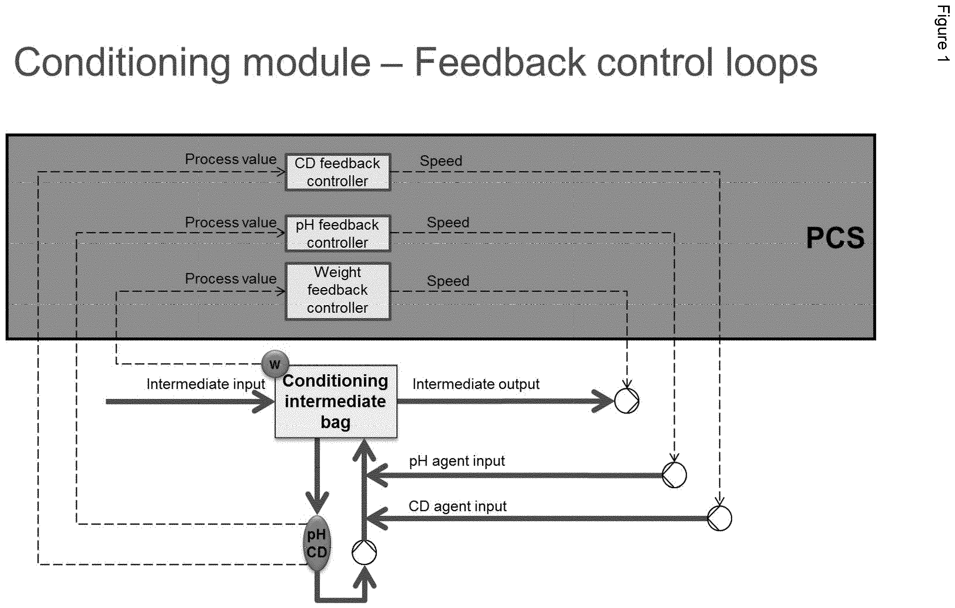

In a preferred embodiment of the at least one subsystem a) for automatically controlling at least two actuators simultaneously which influence the same conditioning volume the fill level of the conditioning volume is detected by a weight sensor and/or a pressure sensor and controlled by the process control system via a feedback control mechanism in parallel to the PID-Controllers for pH and conductivity (cf, FIG 1).

An example for a weight sensor is a scale. An example for a fill level sensor is a capacity sensor or a hydrostatic pressure sensor.

In a preferred embodiment of the at least one subsystem a) for automatically controlling at least two actuators simultaneously which influence the same conditioning volume at least two characteristics of the fluid stream and at least one feature of at least one conditioning volume are detected by at least three sensors. Accordingly the system of this preferred embodiment comprises at least three converters and at least three actuating values are calculated by the at least one control system which influences at least three actuators.

In an especially preferred embodiment of the at least one subsystem a) for automatically controlling at least two actuators simultaneously which influence the same conditioning volume the at least two characteristics of the fluid stream and the at least one feature of at least one conditioning volume detected by at least three sensors are pH, conductivity and fill level e.g. weight of the conditioning volume e.g. a surge bag connected to a homogenization loop.

In one specific example of the of the at least one subsystem a) for automatically controlling at least two actuators simultaneously which influence the same conditioning volume the input product stream enters a homogenization loop from a previous unit operation - i.e. this is termed the intermediate input in FIG. 1. In this specific example a surge bag is connected to the homogenization loop. Thus, either in the homogenization loop and/or in the surge bag at least one detector each for pH level, conductivity and weight of the surge bag are present. The detectors are independent from each other and measure simultaneously and in parallel representative characteristics of the circulated fluid flow. In this example the circulation loop and the surge bag together have a short dead time. The process control system influences three actuators, here one pump for pH set agent, one pump for conductivity set agent and one pump for pumping fluid from the surge bag, i.e. controlling the fill level of the surge bag, via actuating values calculated based on the detected signals for pH level, conductivity and weight via using feed forward, feedback (featuring PID controller) and advanced calculations for determination of the actuating values for the pH agent pump and conductivity agent pump as well as feedback control for determination of the actuating value for the weight influencing pump. All three pumps influence the same condition element i.e. the same surge bag connected to a homogenization loop.

In the specific example of FIG. 1 the PID-Controller for pH is parameterized to act slower than the PID-Controller for conductivity. Specifically, in this chosen example the conductivity is regulated 5x faster than the pH value. Hence the faster addition of water as conductivity set-up agent can counteract the influence of the pH set-up agent on the conductivity thereby ensuring that the product stream leaving the condition element has pH and conductivity values within the range required by the subsequent unit operation. In detail, in order to illustrative the principle further it is assumed that in this specific example the proportional elements of the PID-Controllers for pH and conductivity is set to a specific value to inhibit an overshooting during addition of the individual set agent on the one hand, but still. The integral element controls the deviation which is to be minimized by 80% in a predetermined amount of time (e.g. a pH value of 5,5 is to be reached to 80% in 10 min),(e.g. the pH value of the proportional element is influenced via addition of a pH set agent, which also influenced the conductivity. Conductivity itself, on the other hand, is regulated via the integral element, which e.g. is set so that a specific conductivity is reached to 80% within 2 min via addition of water i.e. dilution of the pH set agent). The derivative element accounts for the change rate of the actually measured value and is set to 0 in this example. It is preferred that the integral part is larger than the dead time of the system as otherwise the regulation of the system can increase excessively.

Moreover, in this example the fill level of the conditioning volume is detected by a weight detector and the actuating value of the fill level of the conditioning volume is calculated by the process control system via a proportional-integral (PI) controller. In this specific example the set value i.e. target filling level of the surge bag is set to 30% and the P-Part is set to 1. In detail, if for example a deviation of +5% of the target filling level of the surge bag arises the process control system calculates this deviation from the characteristic detected by the weight detector and performs the calculation: deviation x the P-Part value (5x1) thereby arriving at the actuating value which is used by the process control system to influence the pump conveying the product stream out of the surge bag. Hence, the pump will act with a pump rate of 5%. If the P-Part of the proportional (P) controller is set to 2, the pump rate would be 5x2 = 10%. Hence the process control system can balance any disturbances as long as the pump rate of the pump conveying process flow out of the surge bag can compensate the incoming process flow as well as any fluid added to adjust pH and conductivity. Therefore, also the surge bag has to be of a size large enough to counteract the slowness of the process of adjusting the pH and the conductivity, thereby ensuring that even if the pump rate of the pump conveying process flow out of the surge bag increases the process flow leaving the surge bag has the required pH value and required conductivity. In other words the surge bag is large enough to dilute and dampen the disturbance.

Furthermore in this specific example the pH sensor detects the characteristic pH of the fluid stream and transmits a millivolt signal to the converter, which in turn converts the millivolt signal into a milliampere signal and transmits said milliampere signal to the process control system. The process control system in turn converts the milliampere signal into a value corresponding to the current pH value which can then be compared to the pH set value. Any deviation between the actual process characteristic i.e. the actual pH value and the pH set value is recognized and can be corrected by the process control system by calculation of an actuating value which is used to influence the pump conveying the pH set agent, thereby influencing the characteristic pH of the fluid stream.

In this specific example the pH probe constantly transmits the millivolt signal and also the converter transmits the milliampere signal constantly. In this example the signal is processed once every second in the process control system and the process control system uses moving average of 5 seconds.

In one example of the at least one subsystem a) for automatically controlling at least two actuators simultaneously which influence the same conditioning volume the conditioning volume comprises a surge bag of a nominal volume between 0.5 liters - 5 liters, preferably 1 l with a target fill level of 300 grams.

The parallel operations acting on the same conditioning volume described in the specific example above are shown in FIG 1.

In a preferred embodiment of the at least one subsystem a) for automatically controlling at least two actuators simultaneously which influence the same conditioning volume the actuating values for the pH agent pump and the conductivity agent pump are calculated by the process control system via employing at least one cascade feedback controller in combination with at least one forward controller. It was surprisingly found that via employing at least one cascade feedback controller in combination with at least one forward controller an automatic simultaneous tight control of pH and conductivity is possible (cf. box "pH feedback controller" in FIG. 1). In detail, the combination of at least one cascade feedback controller with at least one forward controller allows for using a correction factor/corrected/artificial setpoint when calculating the actuating value. Due to the use of this correction factor/corrected/artificial setpoint the actuating pH value is reached automatically in a more efficient and reliant way as illustrated below in FIG 1. In this preferred embodiment the pump conveying fluid from the surge bag only intervenes, if the fill level of the conditioning volume is too low and hence the process control system prevents the pumps - i.e. the actuators - influencing the pH value and the conductivity value respectively to convey any additional fluid flow.

As used herein the term "cascade feedback control" refers to a calculation method of the process control system comprising at least two calculating steps for controlling and/or regulating which are connected in series, i.e. at least one value of the first calculating step for controlling and/or regulating is used as input for the second calculating step for controlling and/or regulating. Said value can be 0 and can be corrected by feed forward regulation. An example of such a cascade feedback control is a case where an actual process characteristic of a fill level value of a given surge bag is used in the first calculating step for feedback and/or feedforward and the output of said first calculating step for feedback and/or feedforward for example sets the pump rate of a pump depending on whether the actual process characteristic of said fill level value is too high or too low compared with a set value - i.e. a reference value - thus the first unit controls. The output of said first calculating step for feedback and/or feedforward is used in the second calculating step where it is combined with a value of a different actual process characteristic, e.g. an measured/determined pH value, to influence, a further actuator, which is neither the pump influencing the fill level of the surge bag nor the pump influencing the pH value.

As used herein the term "chromatography" refers to the separation of a mixture of two or more analytes into individual components based on the differential distribution of the components between a stationary phase and a mobile phase. The stationary phase can be e.g. a resin and/or a membrane absorber.

As used herein the term "flow-through" refers to an operation mode of a chromatographic unit, in which many of the impurities either specifically bind to the separation medium while the product of interest does not, thus allowing the recovery of the desired product in the "flow-through" and/or in which both the product of interest and one or more impurities bind to the separation medium. In the second case the impurities are present to a higher extent in the separation medium than the product of interest and hence as loading continues unbound product of interest can be recovered in the "flow through". In other words, the fluid stream leaving the chromatographic unit operation during the entire time when product is loaded on the chromatographic unit operation constitutes the product stream.

As used herein the term "bind and elute" (or bind-and-elute) refers to an operation mode of a chromatographic unit, in which the product differentially binds to the chromatographic medium. Hence, a bind and elute type chromatography comprises at least the steps of loading, washing, elution and regeneration of a chromatography column, wherein the main constituent of the fluid stream leaving the chromatography column during elution is the product stream.

One type of bind and elute chromatography is continuous bind and elute chromatography where a subsequent unit operation starts processing the product stream before the continuous bind and elute chromatography has finished processing the product stream i.e. two units connected in series simultaneously process the fluid flow that is flowing through them.

As used herein the term "closed" refers to both "functionally closed" as well as "completely closed".

As used herein the term "completely closed" means that the production plant is operated in such a way that the fluid stream is not exposed to the room environment. Materials, components, objects, buffers, and the like can be added from outside, wherein, however, this addition takes place in such a way that exposure of the fluid stream to the room environment is avoided.

The term "functionally closed" refers to a process that may be opened but is "rendered closed" by a cleaning, sanitization and/or sterilization that is appropriate or consistent with the process requirements, whether sterile, aseptic or low bioburden. These systems shall remain closed during production within the system. Examples include process vessels that may be CIP'd and SIP'd between uses. Non-sterile systems such as chromatography or some filtration systems may also be rendered closed in low bioburden operations if appropriate measures are taken during the particular system setup.

In one embodiment of the system for automated simultaneous control one of the at least two unit operations is a chromatography and the process control system employs a softsensor.

As used herein the term "softsensor" refers to a virtual sensor. Thus the value to be measured is not determined by a substantial sensor, i.e. a device but is determined via calculations based on other measured values.

Using this sensor has the advantage that dynamic loading of a chromatography column can be achieved under continuous process conditions. Under continuous process conditions the concentration of the protein of interest as well as the volumetric feed rate always varies more than under batch process conditions. Thus it cannot simply be assumed that a given target protein amount is loaded during specific time or volume. Instead the loading process has to be monitored with the softsensor in order to determine when a given amount of the protein of interest has been loaded. Therefore, in one example the softsensor is the accumulated (integrated) product of the current volume stream, equal to the integral of current flow rate x current target protein concentration.

As used herein the term "volumetric feed rate" refers to the volume of fluid which passes per unit time (m3/s).

A person skilled in the art knows that chromatography columns can be loaded differently depending on the circumstances. For example, it might be desirable to overload a column, it might be desirable to load a column as much as possible without any product breakthrough and it might be desirable to only partly load a column.

In this respect the dynamic binding capacity refers the amount of target protein the chromatography resin will bind under actual flow conditions before significant breakthrough of unbound protein occurs, while overloading a column resin refers to a situation where unbound protein, which could be bound by a given chromatography resin, if more of said resin was present, can be detected in the outlet stream exciting a given chromatography resin.

In a preferred embodiment of the method employing a softsensor the softsensor automatically triggers events selected from the group consisting of flushing, washing, start-up and shut-down phase of the at least two unit operations.

This has the advantage that the loading state of a column is calculated correctly without misinterpreting times where no or little protein of interest is in the fluid flow as times where loading of the column with protein of interest occurs.

In a preferred embodiment of the method employing the softsensor dynamic loading of a chromatography column is achieved via
a) A pump which ensures flow of the product stream (ml/min)
b) If a bind and eluate or flow through type chromatography is monitored by UV measurement of the protein of interest in the product stream before it enters a chromatography column, i.e. measurement in the feed stream (mg/ml)
c) The integral of both values is generated, i.e. both values are multiplied and added over time, for example if a) = 1 ml/1min, b) = 5 mg/ml then 10 mg of protein of interest are loaded on the column in 2 min

In case of a flow through chromatography, the UV measurement of the protein of interest can also take place in the eluate stream. Moreover, instead of a UV measurement multi-array light scattering could be used to measure the protein of interest.

In one embodiment of the system for automated simultaneous control one of the two unit operations is a feed and bleed unit operation comprising a bleed pump, wherein in this case the system comprises at least one subsystem comprising at least one conditioning volume upstream of the at least one feed and bleed unit operation with at least one sensor for the weight of the at least one conditioning volume as well as at least one sensor for loading of the feed and bleed unit operation, wherein said subsystem employs a combination of feed forward regulation and feedback control for calculating the actuating value influencing the bleed pump.

It was surprisingly found that instead of directly influencing the flow rate of the bleed pump a much tighter control of the product concentration is possible by influencing the flow rate of the bleed pump via a combination of feed forward regulation and feedback control for calculating the actuating value influencing the bleed pump. Specifically this is achieved by using the output of a controller, which takes into account the actually measured value of the product concentration in the feed and bleed unit operation and the set point for the product concentration in the feed and bleed unit operation. Said output is used as a concentration factor which is multiplied in an additional calculation with the flow rate of a pump conveying fluid stream into the feed and bleed unit operation from the at least one conditioning volume, wherein said flow rate of the pump conveying fluid stream into the feed and bleed unit operation from the at least one conditioning volume is influenced via the at least one process control system based on the signal measured by the at least one sensor for the weight of a conditioning volume.

As mentioned above an example of a feed and bleed unit operation is an ultrafiltration unit characterized by a continuous input fluid stream and continuous output fluid stream where the output fluid stream has an increased concentration of a protein of interest compared to the input fluid stream and wherein said concentration of the protein of interest can be adjusted.

In a preferred embodiment the feed and bleed unit operation is an ultrafiltration module.

Moreover, in order to validate the continuous production process described herein in one example - termed the conservative strategy - 3 process performance qualification (PPQ) runs were performed at defined set of set points, since a continuous plant offers multiple parameters to be parameterized. As mentioned above the term "set value" is used interchangeably with the terms "set point value" and "target value" and refers to a specific value of a characteristic of the fluid flow as it should be under the given circumstances and/or at a specific point in time.

In this example 1 to 2 engineering runs were performed prior to the 3 PPQ runs. In said engineering runs "forced excursions" or challenges by "errors on purpose" like flow interruptions were possible. In the 3 PPQ runs not such forced excursions" or challenges by "errors on purpose" were included.

During the 3 PPQ runs, samples were drawn at defined processing steps in combination with different time points (startup, steady state, shutdown) in order to demonstrate inter- and intra-batch consistency over the intended run time.

In addition potential worst case parameters or situations, respectively, were defined in this example as dead volumes, back mixing, pressure drop increase, flow interruptions, sensor fouling (drift) or system leakage. These were validated via installing sensors for pressure, weight, temperature and protein load. Furthermore, critical equipment elements such as filters, sensors, etc. were installed redundantly and used in alternating or stand-by mode. Hence, it was possible to switch and/or exchange these equipment elements based on maximum operation time or other signals without interrupting operations.

Moreover, real time data analysis of inline or online date was implemented in the exemplary production process to e.g. demonstrate integrity of chromatography column packing (asymmetry, fouling).

### Figures

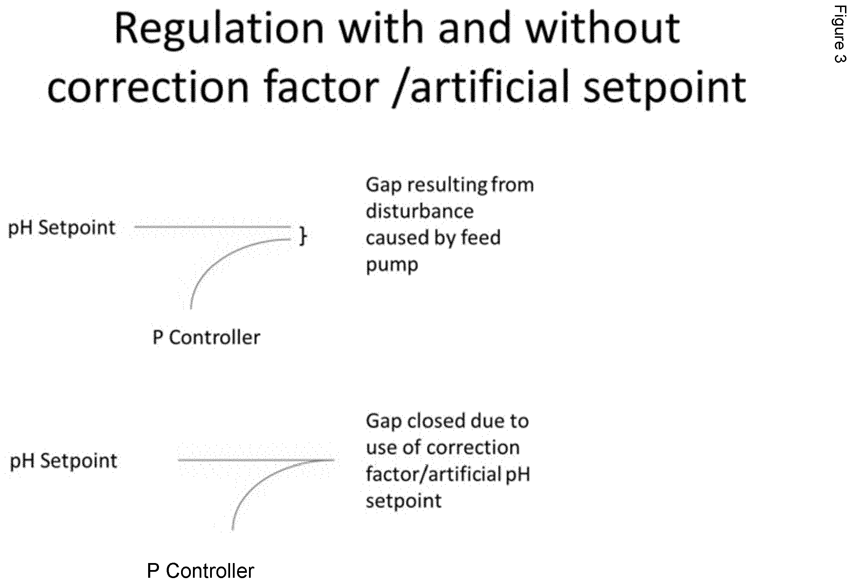

FIG.1 shows a schematic diagram of the at least one subsystem for automatically controlling at least two actuators which influence the same conditioning volume. Here two process characteristics and one feature of at least one conditioning volume are controlled simultaneously. In the example the intermediate input, i.e. the process stream coming from the first of the at least two unit operations has a volumetric flow of 100% and a pH of 3. This pH of 3 has to be in the range of 5 when the product stream leaves the conditioning volume (termed conditioning intermediate bag in Fig 1). The pH sensor measures the pH in the circulated fluid flow and/or in the surge bag and the process control system (PCS) recognizes the deviation between pH 3 and pH 5 and thus sets the speed of the actuator - here the pump delivering the pH set agent - according to the calculated actuating value, to alter the actual process characteristic, i.e. the pH to a value of approximately 5. Simultaneously, the conductivity (CD) sensor is detecting the conductivity in the circulated fluid flow in the homogenization loop and/or in the surge bag. Thus, the CD sensor will detect the change in conductivity due to the addition of pH set up agent. Consequently, the process control system (PCS) recognizes the deviation between the set value for the conductivity and the actual detected process characteristic for conductivity and thus sets the speed of the pump delivering the conductivity set agent according to the calculated actuating value to a rate which allows to counteract the influence (disturbance) of the pH set agent on the conductivity. For example the pump delivering the conductivity set agent e.g. water is automatically set to 240% (2.4 x) of the incoming volumetric flow. Overall, due to the addition of pH-set agent and conductivity set agent the intermediate output, i.e. the process stream leaving the conditioning volume has a volume of 350% of the volume of the intermediate input. To a skilled person it is thus clear that simultaneously in this respect refers to the fact that all three control circuits are active at the same time hence not only enabling a simultaneous but also a real time control.
FIG 2 shows a schematic diagram of a part of the at least one subsystem for automatically controlling at least two actuators which influence the same conditioning volume. In this example the pH actuating value and the conductivity actuating value are calculated by the process control system via employing at least one cascade feedback controller in combination with at least one feed forward regulation.
   Moreover, in a specific example of this embodiment the set pH value in the conditioning volume should be 5.5. Thus, the "setpoint real" is 5.5 and this setpoint value is specified by the process control system to controller 1. Controller 1 is a controller comprising P (proportional) and I (integral) elements i.e. a PI controller. The input of controller 1 in the process control system is based on a pH sensor reading in the conditioning volume. The output of controller 1 is used for additional calculations. The additional calculations also take a disturbance e.g. a speed of a feed pump - as a feed forward into account, which is added to the set point real and results in the corrected/ artificial set point for the second controller. The system is "disturbed" by the feed pump whenever additional process stream with a different pH value arrives at the conditioning volume or if other components such as pH set agent or water that alter the conductivity are added. In order to compensate for this potential disturbance, additional calculations are carried out i.e. in this case the speed of the feed pump conveying process stream into the conditioning volume is used as correction factor (also termed corrected/artificial setpoint) and is multiplied with the output of controller 1. Both values together act as input to controller 2. Hence, in case the feed pump has a speed of 2 and the output of controller 1 is 0.1 a value of 0.2 is added to the pH set point real and controller 2 bases its calculation of the actuating value not on the set-point real of pH 5.5 but on the corrected/artificial set point of 5.7. It should be noted that in a case where the speed of the feed pump = 0, the input of controller 1 into controller 2 is also =0 as the value is multiplied ("x"). In such a case no disturbance of the feed pump has to be counteracted and controller 2 merely acts on any deviation between the set-point and the measured pH value.
FIG. 3
   Specifically FIG 3 shows that without the controller 1 (of Fig. 2, i.e. here controller PI) the controller 2 (of Fig. 2 i.e. here controller P) would constantly have to adjust whenever the feed pump conveying fluid flow into the conditioning volume is active in order to reach the pH setpoint as it has to take not on the altering pH levels but also the speed of the feed pump into account. Via employing also the controller 1 and especially the additional calculations leading to the correction factor (also termed corrected/artificial setpoint) thereby automatically setting the artificial setpoint the gap between the pH setpoint and the actuating pH value calculated by the controller 2 is automatically and reliably closed.
FIG 4 is a schematic illustration of a combination of feedforward regulation and feedback control influencing the bleed pump. The feedforward component in this example is the speed of the feed pump conveying fluid flow into the feed and bleed unit operation and the feedback component is the detected UV value. The detected UV value corresponds to the least one feature related to the loading of the feed and bleed unit operation and is compared by the at least one process control system with a set point value. Additional calculations are performed by the process control system taking into account the deviation between said set point value and the actually detected UV value as well as the speed of the feed pump resulting in the actuating value for the bleed pump.

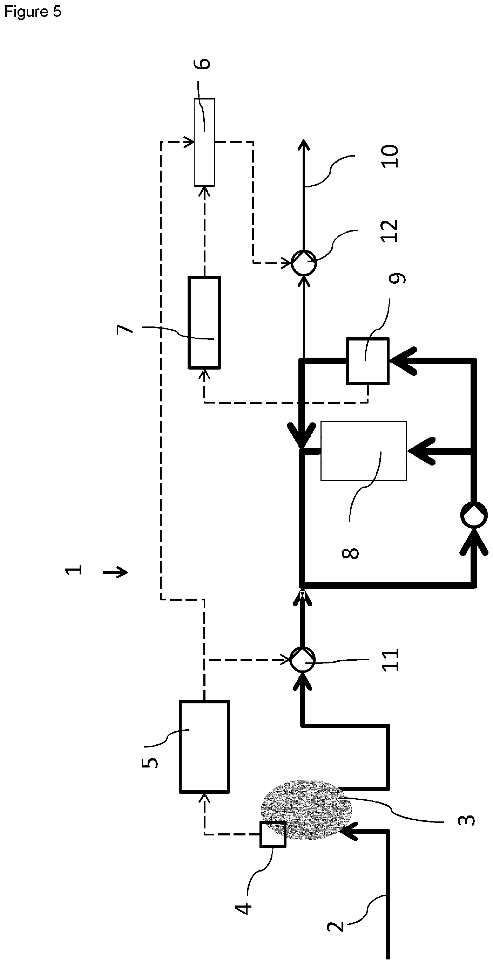

FIG. 5 is a schematic illustration of the method (1) described herein comprising a combination of feedforward regulation and feedback control influencing the bleed pump in a feed and bleed unit operation. In this specific example the feed and bleed unit operation is an ultrafiltration module (8). Prior to entering the ultrafiltration module (8) the product stream (2) , which in this example arrives from a previous unit operation enters a conditioning volume (3) - here a (conditioning) intermediate bag. The (conditioning) intermediate bag (3) comprises a weight sensor (4), here a scale, which measures the weight of the (conditioning) intermediate bag. Based on this measurement a weight feedback controller (5) of the process control system (PCS) can determine the fill level of the intermediate bag (3). If said fill level is above the set value the PCS will influence the corresponding actuator i.e. the speed of the pump conveying process stream from the (conditioning) intermediate bag into the ultrafiltration module (feed pump (11) will increase and vice versa.
   In addition the unit operation comprises a UV detector (9) as sensor for loading of the feed and bleed unit operation. The recirculation rate of the fluid flow in this example is high enough so that the UV sensor (9) can be placed before, after or in parallel to the ultrafiltration module (8). Based on the signal transmitted by the UV detector, a UV feedback controller (7) of the process control system determines whether there is a deviation between the actual UV value and the set UV value. If there is a deviation, additional calculations are carried out by the process control system (symbolized by box (6)) via employing a combination of feedforward regulation and feedback control for influencing the bleed pump (12). In detail said deviation of is multiplied with the rate of the feed pump (11) conveying fluid flow from the (conditioning) intermediate bag to arrive at the actuating value that influences the bleed pump (12), i.e. the pump that pumps the ultrafiltrated product stream (10) out of the UV control loop and out of the ultrafiltration unit operation.
   In other words the deviation between the actual UV value and the set UV value multiplied by the rate of the feed pump - e.g. the antibody concentration determined by UV detection (i.e. the concentration factor) multiplied by the flow rate - is the disturbance that has to be counteracted by the bleed pump, i.e. the pump that pumps the process stream out of the UV control loop. Thus, it was surprisingly found that instead of directly influencing the flow rate of the bleed pump a much tighter control is possible via using additional calculations to take into account the concentration factor when calculating the actuating value for the bleed pump. With this, only the concentration variations in the intermediate input need to be compensated, but variations in the feed flow rate are immediately compensated by taking into account the concentration factor when calculating the actuating value for the bleed pump.

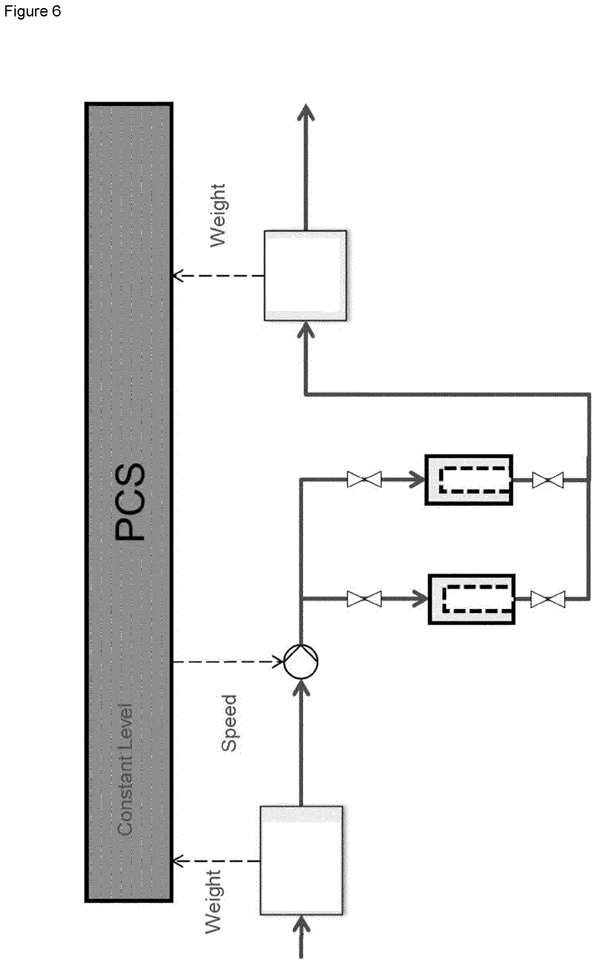

FIG.6 is a schematic illustration of the concept of synchronization of flow rates in a continuous production process in which different master units. Flow synchronization is required as it is not possible to control two master units with exactly equal flow rate. Therefore, at least one auxiliary stream must be present between two master units, which compensates the differences between the master unit flow rates. The auxiliary stream conveys liquid into the product stream or out of the product stream. The flow rates of the salve units are controlled by the process control system (PCS) via fill level and/or weight control of buffer volumes. In this example the buffer volume is provided in the form of surge bags.

## Claims

1. Method for automated simultaneous control of at least two process characteristics of a continuous production process with at least one fluid stream, at least two unit operations, at least one process control system and at least one conditioning volume, comprising at least one of the following
a) at least one subsystem for automatically controlling at least two actuators simultaneously which influence the same conditioning volume
and/or
b) at least one subsystem for automatically influencing at least one actuator based on a combination of feed forward regulation and feedback control
wherein
a) if the method comprises at least one subsystem for automatically controlling at least two actuators which influence the same conditioning volume the at least one subsystem for automatically controlling at least two actuators which influence the same conditioning volume controls the at least two process characteristics via
• detecting simultaneously at least two characteristics of the fluid stream via at least two independent sensors
• calculating at least two actuating values, one for each of the at least two measured characteristics, in the at least on process control system
• influencing via said at least two actuating values at least two actuators,
and/or
b) if the method comprises at least one subsystem for automatically influencing at least one actuator based on a combination of feed forward regulation and feedback control the at least one subsystem for automatically influencing at least one actuator based on a combination of feed forward regulation and feedback control influences the at least one process characteristics via
• detecting at least one feature of at least one conditioning volume upstream of one of the at least two unit operations with at least one sensor
• detecting at least one feature related to the loading of the said one of the at least two unit operations
• calculating at least one actuating value in the at least one process control system based on the detected at least one feature of at least one conditioning volume upstream of the said one of the at least two unit operations as well as the at least one feature related to the loading of the said one of the at least two unit operation
• influencing the at least one actuator via said at least one actuating value wherein said influencing of the actuator is thus based on a combination of feed forward regulation derived from the at least one detected feature related to the loading of the one said of the at least two unit operations and feedback control derived from the at least one detected feature of at least one conditioning volume
and wherein the at least one conditioning volume is a volume of fluid and a portion of the fluid flow in which the simultaneous detection of the at least two characteristics of the fluid stream takes place and/or in which the detection of at least one feature takes place and/or where the detection of the at least one feature of at least one conditioning volume occurs.

2. Method according to claim 1 wherein said method according to claim 1 or claims 2 comprises at least one subsystem for automatically controlling at least two actuators which influence the same conditioning volume the method a) further comprises the steps of
• transmitting said at least two characteristics of the fluid stream detected by the at least two independent sensors as signals to at least two converters which convert the signals to converted signals and
• transmitting the at least two converted signals to the at least one process control system.

3. Method according to claim 2 wherein the method a) comprising the at least one subsystem for automatically controlling at least two actuators which influence the same conditioning volume further comprises the steps of
• comparing in the at least one process control system said at least two converted signals, which correspond to at least two actual process characteristics, with at least two set values for the same process characteristics,
• calculating the at least two actuating values in the process control system based on said comparison as well as additional calculations.

4. Method according to anyone of claims 1-3 comprising at least two subsystems.

5. System for automated simultaneous control of at least two process characteristics of a fluid stream of a continuous production process with at least two unit operations, at least one process control system and at least one conditioning volume, comprising at least one of the following
a) at least one subsystem for automatically controlling at least two actuators simultaneously which influence the same conditioning volume comprising at least two independent sensors detecting simultaneously at least two characteristics of the fluid stream and wherein the at least one process control system is configured to calculate based on said at least two characteristics of the fluid stream at least two actuating values one for each of the at least two measured characteristics, which influence at least two actuators,
and/or
b) at least one subsystem for automatically influencing at least one actuator based on a combination of feed forward regulation and feedback control comprising at least one conditioning volume upstream of the at least two unit operations with at least one sensor for detecting a feature of the at least one conditioning volume as well as at least one sensor for detecting at least one feature related to the loading of the said at least one unit operation and at least one actuator influencing the said at least one unit operation wherein the at least one process control system is configured to calculate at least one actuating value based on the detected feature of the at least one conditioning volume upstream of the at least two unit operations as well as the at least one feature related to the loading of the said one of the at least two unit operations and wherein the at least one actuator is configured to be influenced via said at least one actuating value, wherein said influencing of the actuator is thus based on a combination of feed forward regulation derived from the at least one detected feature related to the loading of the said of the at least two unit operations and feedback control derived from the detected feature of the at least one conditioning volume and wherein the at least one conditioning volume is a volume of fluid and a portion of the fluid flow in which the simultaneous detection of the at least two characteristics of the fluid stream takes place and/ or in which the detection of at least one feature takes place and/or where the detection of the at least one feature of at least one conditioning volume occurs.

6. System according to claim 5, further comprising at least one a subsystem for matching of the flow rates of a slave unit to the flow rate of another slave unit or master units with the proviso that in the case of several master units an auxiliary stream is opened, and comprising
• at least one master unit and at least one slave unit wherein each slave unit influences at least one buffer volume wherein each buffer volume is provided in the form of a surge tank and/or expandable tubing, as well as at least one sensor for each buffer volume.

7. System according to claim 5, wherein the at least one subsystem for automatically controlling at least two actuators simultaneously which influence the same conditioning volume further comprises at least two converters to which the at least two independent sensors transmit said at least two characteristics of the fluid stream in the form of at least two signals and which then convert the at least two signals and transmit the at least two converted signals to the at least one process control system.

8. System according to claims, wherein the continuous production process is a continuous production process for biomolecules.

9. System according to claim 5, wherein the fluid stream is a continuous fluid stream.

10. System according to claim 5 wherein at least two characteristics of the fluid stream and at least one feature of at least one conditioning volume are automatically and simultaneously controlled.

11. System according to claim 5, wherein one of the at least two unit operations is a chromatography and the process control system employs a softsensor.

## Patentansprüche

1. Verfahren zur automatisierten gleichzeitigen Regelung von mindestens zwei Prozesseigenschaften eines kontinuierlichen Produktionsprozesses mit mindestens einem Fluidstrom, mindestens zwei Unit Operations , mindestens einem Prozessleitsystem und mindestens einem Konditionierungsraum, umfassend mindestens eines von Folgendem:
a) mindestens einem Untersystem zum automatischen gleichzeitigen Regeln von mindestens zwei Aktoren, die denselben Konditionierungsraum beeinflussen,
und/oder
b) mindestens einem Untersystem zum automatischen Beeinflussen mindestens eines Aktors basierend auf einer Kombination einer Feedforward-Steuerung und einer Feedback-Regelung,
wobei,
a) wenn das Verfahren mindestens ein Untersystem zum automatischen Regeln von mindestens zwei Aktoren, die denselben Konditionierungsraum beeinflussen, umfasst, das mindestens eine Untersystem zum automatischen Regeln von mindestens zwei Aktoren, die denselben Konditionierungsraum beeinflussen, die mindestens zwei Prozesseigenschaften durch Folgendes regelt:
• gleichzeitiges Detektieren von mindestens zwei Eigenschaften des Fluidstroms durch mindestens zwei unabhängige Sensoren,
• Berechnen von mindestens zwei Aktionswerten, einen für jede der mindestens zwei gemessenen Eigenschaften, in dem mindestens einen Prozessleitsystem,
• Beeinflussen von mindestens zwei Aktoren durch die mindestens zwei Aktionswerte,
und/oder,
b) wenn das Verfahren mindestens ein Untersystem zum automatischen Beeinflussen mindestens eines Aktors basierend auf einer Kombination einer Feedforward-Steuerung und einer Feedback-Regelung umfasst, das mindestens eine Untersystem zum automatischen Beeinflussen mindestens eines Aktors basierend auf einer Kombination einer Feedforward-Steuerung und einer Feedback-Regelung die mindestens eine Prozesseigenschaft durch Folgendes beeinflusst:
• Detektieren mindestens eines Merkmals mindestens eines einer der mindestens zwei Unit Operations vorgeschalteten Konditionierungsraums mit mindestens einem Sensor,
• Detektieren mindestens eines auf das Laden der einen der mindestens zwei Unit Operations bezogenen Merkmals,
• Berechnen mindestens eines Aktionswerts in dem mindestens einen Prozessleitsystem basierend auf dem mindestens einen detektierten Merkmal mindestens eines der einen der mindestens zwei Unit Operations vorgeschalteten Konditionierungsraums sowie dem mindestens einen auf das Laden der einen der mindestens zwei Unit Operations bezogenen Merkmal,
• Beeinflussen des mindestens einen Aktors durch den mindestens einen Aktuationswert,
wobei das Beeinflussen des Aktors somit auf einer Kombination einer Feedforward-Steuerung, die von dem mindestens einen detektierten, auf das Laden der einen der mindestens zwei Unit Operations bezogenen Merkmal abgeleitet wird, und einer Feedback-Regelung, die von dem mindestens einen detektierten Merkmal mindestens eines Konditionierungsraums abgeleitet wird, basiert,
und wobei der mindestens eine Konditionierungsraum ein Fluidvolumenund ein Teil des Fluidflusses ist, wo die gleichzeitige Detektion der mindestens zwei Eigenschaften des Fluidstroms stattfindet und/oder wo die Detektion mindestens eines Merkmals stattfindet und/oder wo die Detektion des mindestens einen Merkmals mindestens eines Konditionierungsraums erfolgt.

2. Verfahren nach Anspruch 1, wobei das Verfahren nach Anspruch 1 oder Anspruch 2 mindestens ein Untersystem zum automatischen Regeln von mindestens zwei Aktoren, die denselben Konditionierungsraum beeinflussen, umfasst, wobei das Verfahren a) ferner die folgenden Schritte umfasst:
• Übertragen der mindestens zwei durch die mindestens zwei unabhängigen Sensoren detektierten Eigenschaften des Fluidstroms als Signale an mindestens zwei Umwandler, die die Signale in umgewandelte Signale umwandeln, und
• Übertragen der mindestens zwei umgewandelten Signale an das mindestens eine Prozessleitsystem.

3. Verfahren nach Anspruch 2, wobei das Verfahren a), das das mindestens eine Untersystem zum automatischen Regeln von mindestens zwei Aktoren, die denselben Konditionierungsraum beeinflussen, umfasst, ferner die folgenden Schritte umfasst:
• Vergleichen, in dem mindestens einen Prozessleitsystem, der mindestens zwei umgewandelten Signale, die mindestens zwei tatsächlichen Prozesseigenschaften entsprechen, mit mindestens zwei Sollwerten für dieselben Prozesseigenschaften,
• Berechnen der mindestens zwei Aktionswerte in dem Prozessleitsystem basierend auf dem Vergleich sowie auf zusätzlichen Berechnungen.

4. Verfahren nach einem der Ansprüche 1-3, das mindestens zwei Untersysteme umfasst.

5. System zur automatisierten gleichzeitigen Regelung von mindestens zwei Prozesseigenschaften eines Fluidstroms eines kontinuierlichen Produktionsprozesses mit mindestens zwei Unit Operations, mindestens einem Prozessleitsystem und mindestens einem Konditionierungsraum, umfassend mindestens eines von Folgendem:
a) mindestens einem Untersystem zum automatischen gleichzeitigen Regeln von mindestens zwei Aktoren, die denselben Konditionierungsraum beeinflussen, umfassend mindestens zwei unabhängige Sensoren, die gleichzeitig mindestens zwei Eigenschaften des Fluidstroms detektieren, wobei das mindestens eine Prozessleitsystem eingerichtet ist, um basierend auf den mindestens zwei Eigenschaften des Fluidstroms mindestens zwei Aktionswerte, einen für jede der mindestens zwei gemessenen Eigenschaften, die mindestens zwei Aktoren beeinflussen, zu berechnen,
und/oder
b) mindestens einem Untersystem zum automatischen Beeinflussen mindestens eines Aktors basierend auf einer Kombination einer Feedforward-Steuerung und einer Feedback-Regelung, umfassend mindestens einen den mindestens zwei Unit Operations vorgeschalteten Konditionierungsraum, mit mindestens einem Sensor zum Detektieren eines Merkmals des mindestens einen Konditionierungsraums sowie mindestens einem Sensor zum Detektieren mindestens eines auf das Laden der mindestens einen Unit Operation bezogenen Merkmals und mindestens einem Aktor, der die mindestens eine Unit Operation beeinflusst, wobei das mindestens eine Prozessleitsystem eingerichtet ist, um mindestens einen Aktuationswert basierend auf dem detektierten Merkmal des mindestens einen den mindestens zwei Unit Operations vorgeschalteten Konditionierungsraums sowie dem mindestens einen auf das Laden der einen der mindestens zwei Unit Operations bezogenen Merkmal zu berechnen, und wobei der mindestens eine Aktor eingerichtet ist, um durch den mindestens einen Aktionswert beeinflusst zu werden, wobei das Beeinflussen des Aktors somit auf einer Kombination einer Feedforward-Steuerung, die von dem mindestens einen detektierten, auf das Laden der einen der mindestens zwei Unit Operations bezogenen Merkmal abgeleitet wird, und einer Feedback-Regelung, die von dem detektierten Merkmal des mindestens einen Konditionierungsraums abgeleitet wird, basiert, und wobei der mindestens eine Konditionierungsraum ein Fluidvolumen und ein Teil des Fluidflusses ist, wo die gleichzeitige Detektion der mindestens zwei Eigenschaften des Fluidstroms stattfindet und/oder wo die Detektion mindestens eines Merkmals stattfindet und/oder wo die Detektion des mindestens einen Merkmals mindestens eines Konditionierungsraums erfolgt.

6. System nach Anspruch 5, ferner umfassend mindestens ein Untersystem zum Anpassen der Fließgeschwindigkeiten einer Slave-Einheit an die Fließgeschwindigkeit einer weiteren Slave-Einheit oder von Master-Einheiten mit der Maßgabe, dass im Fall mehrerer Master-Einheiten ein Hilfsstrom eingeleitet wird, und umfassend
• mindestens eine Master-Einheit und mindestens eine Slave-Einheit, wobei jede Slave-Einheit mindestens einen Pufferraum beeinflusst, wobei jeder Pufferraum in Form eines Ausgleichsbehälters und/oder dehnbarer Schläuche bereitgestellt wird, sowie mindestens einen Sensor für jeden Pufferraum.

7. System nach Anspruch 5, wobei das mindestens eine Untersystem zum automatischen gleichzeitigen Regeln von mindestens zwei Aktoren, die denselben Konditionierungsraum beeinflussen, ferner mindestens zwei Umwandler umfasst, an die die mindestens zwei unabhängigen Sensoren die mindestens zwei Eigenschaften des Fluidstroms in Form von mindestens zwei Signalen übertragen und die danach die mindestens zwei Signale umwandeln und die mindestens zwei umgewandelten Signale an das mindestens eine Prozessleitsystem übertragen.

8. System nach Anspruch 5, wobei der kontinuierliche Produktionsprozess ein kontinuierlicher Produktionsprozess für Biomoleküle ist.

9. System nach Anspruch 5, wobei der Fluidstrom ein kontinuierlicher Fluidstrom ist.

10. System nach Anspruch 5, wobei mindestens zwei Eigenschaften des Fluidstroms und mindestens ein Merkmal mindestens eines Konditionierungsraums automatisch und gleichzeitig geregelt werden.

11. System nach Anspruch 5, wobei eine der mindestens zwei Unit Operations eine Chromatographie ist und das Prozessleitsystem einen Softsensor verwendet.

## Revendications

1. Procédé de commande automatisée simultanée d'au moins deux caractéristiques de processus d'un processus de production continue avec au moins un flux de fluide, au moins deux opérations unitaires, au moins un système de commande de processus et au moins un volume de conditionnement, comprenant
a) au moins un sous-système pour commander automatiquement de façon simultanée au moins deux actionneurs qui influent sur le même volume de conditionnement
et/ou
b) au moins un sous-système pour influer automatiquement sur au moins un actionneur sur la base d'une combinaison d'une régulation par anticipation et d'une commande par rétroaction
a) si le procédé comprend au moins un sous-système pour commander automatiquement au moins deux actionneurs qui influent sur le même volume de conditionnement, l'au moins un sous-système pour commander automatiquement au moins deux actionneurs qui influent sur le même volume de conditionnement commandant les au moins deux caractéristiques de processus par
• détection simultanée d'au moins deux caractéristiques du flux de fluide au moyen d'au moins deux capteurs indépendants
• calcul d'au moins deux valeurs d'actionnement, une pour chacune des au moins deux caractéristiques mesurées, dans l'au moins un système de commande de processus
• influence sur au moins deux actionneurs au moyen desdites au moins deux valeurs d'actionnement,
et/ou
b) si le procédé comprend au moins un sous-système pour influer automatiquement sur au moins un actionneur sur la base d'une combinaison d'une régulation par anticipation et d'une commande par rétroaction, l'au moins un sous-système pour influer automatiquement sur au moins un actionneur sur la base d'une combinaison d'une régulation par anticipation et d'une commande par rétroaction influant sur l'au moins une caractéristique de processus par
• détection d'au moins une caractéristique d'au moins un volume de conditionnement en amont d'une des au moins deux opérations unitaires au moyen d'au moins un capteur
• détection d'au moins une caractéristiques liée au chargement de ladite une des au moins deux opérations unitaires
• calcul d'au moins une valeur d'actionnement dans l'au moins un système de commande de processus sur la base de l'au moins une caractéristique détectée d'au moins un volume de conditionnement en amont de ladite une des au moins deux opérations unitaires ainsi que de l'au moins une caractéristique liée au chargement de ladite une des au moins deux opérations unitaires
• influence sur l'au moins un actionneur au moyen de ladite au moins une valeur d'actionnement
ladite influence sur l'actionneur étant ainsi basée sur une combinaison d'une régulation par anticipation dérivée de l'au moins une caractéristique détectée liée au chargement de ladite une des au moins deux opérations unitaires et d'une commande par rétroaction dérivée de l'au moins une caractéristique détectée d'au moins un volume de conditionnement
et l'au moins un volume de conditionnement étant un volume de fluide et une partie de l'écoulement de fluide où s'effectue la détection simultanée des au moins deux caractéristiques du flux de fluide et/ou où s'effectue la détection d'au moins une caractéristique et/ou où se produit la détection de l'au moins une caractéristique d'au moins un volume de conditionnement.

2. Procédé selon la revendication 1, ledit procédé selon la revendication 1 ou la revendication 2 comprenant au moins un sous-système pour commander automatiquement au moins deux actionneurs qui influent sur le même volume de conditionnement, le procédé a) comprenant en outre les étapes suivantes
• transmission desdites au moins deux caractéristiques du flux de fluide détectées par les au moins deux capteurs indépendants sous forme de signaux à au moins deux convertisseurs qui convertissent les signaux en signaux convertis et
• transmission des au moins deux signaux convertis à l'au moins un système de commande de processus.

3. Procédé selon la revendication 2, le procédé a) comprenant l'au moins un sous-système pour commander automatiquement au moins deux actionneurs qui influent sur le même volume de conditionnement comprenant en outre les étapes suivantes
• comparaison, dans l'au moins un système de commande de processus, desdits au moins deux signaux convertis, qui correspondent à au moins deux caractéristiques de processus réelles, à au moins deux valeurs de consigne pour les mêmes caractéristiques de processus,
• calcul des au moins deux valeurs d'actionnement dans le système de commande de processus sur la base de ladite comparaison ainsi que de calculs supplémentaires.

4. Procédé selon l'une quelconque des revendications 1 à 3, comprenant au moins deux sous-systèmes.

5. Procédé de commande automatisée simultanée d'au moins deux caractéristiques de processus d'un flux de fluide d'un processus de production continue avec au moins deux opérations unitaires, au moins un système de commande de processus et au moins un volume de conditionnement, comprenant
a) au moins un sous-système pour commander automatiquement de façon simultanée au moins deux actionneurs qui influent sur le même volume de conditionnement, comprenant au moins deux capteurs indépendants détectant simultanément au moins deux caractéristiques du flux de fluide, et l'au moins un système de commande de processus étant configuré pour calculer, sur la base desdites au moins deux caractéristiques du flux de fluide, au moins deux valeurs d'actionnement, une pour chacune des au moins deux caractéristiques mesurées, qui influent sur au moins deux actionneurs,
et/ou
b) au moins un sous-système pour influer automatiquement sur au moins un actionneur sur la base d'une combinaison d'une régulation par anticipation et d'une commande par rétroaction comprenant au moins un volume de conditionnement en amont des au moins deux opérations unitaires à l'aide d'au moins un capteur pour détecter une caractéristique de l'au moins un volume de conditionnement ainsi que d'au moins un capteur pour détecter au moins une caractéristique liée au chargement de ladite au moins une opération unitaire et au moins un actionneur influant sur ladite au moins une opération unitaire, l'au moins un système de commande de processus étant configuré pour calculer au moins une valeur d'actionnement sur la base de la caractéristique détectée de l'au moins un volume de conditionnement en amont des au moins deux opérations unitaires ainsi que de l'au moins une caractéristique liée au chargement de ladite une des au moins deux opérations unitaires, et l'au moins un actionneur étant configuré pour être influencé au moyen de ladite au moins une valeur d'actionnement, ladite influence sur l'actionneur étant ainsi basée sur une combinaison d'une régulation par anticipation dérivée de l'au moins une caractéristique détectée liée au chargement de ladite une des au moins deux opérations unitaires et d'une commande par rétroaction dérivée de la caractéristique détectée de l'au moins un volume de conditionnement, et l'au moins un volume de conditionnement étant un volume de fluide et une partie de l'écoulement de fluide où s'effectue la détection simultanée des au moins deux caractéristiques du flux de fluide et/ou où s'effectue la détection d'au moins une caractéristique et/ou où se produit la détection de l'au moins une caractéristique d'au moins un volume de conditionnement.

6. Système selon la revendication 5, comprenant en outre au moins un sous-système pour adapter les débits d'une unité esclave au débit d'une autre unité esclave ou d'unités maîtres à condition, dans le cas de plusieurs unités maîtres, qu'un flux auxiliaire soit ouvert, et comprenant
• au moins une unité maître et au moins une unité esclave, chaque unité esclave influant sur au moins un volume tampon, chaque volume tampon prenant la forme d'un réservoir tampon et/ou d'un tuyau expansible, ainsi qu'au moins un capteur pour chaque volume tampon.

7. Système selon la revendication 5, l'au moins un sous-système pour commander automatiquement de façon simultanée au moins deux actionneurs qui influent sur le même volume de conditionnement comprenant en outre au moins deux convertisseurs auxquels les au moins deux capteurs indépendants transmettent lesdites au moins deux caractéristiques du flux de fluide sous la forme d'au moins deux signaux et qui convertissent ensuite les au moins deux signaux et transmettent les au moins deux signaux convertis à l'au moins un signal de commande de processus.

8. Système selon la revendication 5, le processus de production continue étant un processus de production continue de biomolécules.

9. Système selon la revendication 5, le flux de fluide étant un flux de fluide continu.

10. Système selon la revendication 5, au moins deux caractéristiques du flux de fluide et au moins une caractéristique d'au moins un volume de conditionnement étant commandées automatiquement et simultanément.

11. Système selon la revendication 5, l'une des au moins deux opérations unitaires étant une chromatographie et le système de commande de processus faisant appel à un capteur logiciel.
